# EUROPÄISCHE PATENTSCHRIFT

(11) **EP 2 750 930 B1**
(45) Veröffentlichungstag und Bekanntmachung des Hinweises auf die Patenterteilung: **20.02.2019**
(21) Anmeldenummer: 12727796.0
(22) Anmeldetag: 09.06.2012
(51) Int. Cl.: B60Q 1/30, B60Q 1/44, B60Q 1/52

(54) **VERFAHREN ZUM SIGNALISIEREN EINES BREMSVORGANGS AN EINEM ANHÄNGEFAHRZEUG, STEUEREINRICHTUNG UND ANHÄNGEFAHRZEUG**
METHOD FOR SIGNALING A BRAKING PROCESS ON A TRAILER VEHICLE, CONTROL DEVICE, AND TRAILER VEHICLE
PROCÉDÉ DESTINÉ À SIGNALER UN PROCESSUS DE FREINAGE CHEZ UNE REMORQUE, SYSTÈME DE COMMANDE ET REMORQUE

(30) Priorität: 30.08.2011 DE 102011111904
(43) Veröffentlichungstag der Anmeldung: 09.07.2014
(73) Patentinhaber: WABCO GmbH, 30453 Hannover (DE)
(72) Erfinder: BARLSEN, Holger, 30851 Langenhagen (DE); BLECKMANN, Björn, 30163 Hannover (DE); RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2012/002450
(87) Internationale Veröffentlichungsnummer: WO 2013/029702

(56) Entgegenhaltungen:
- WO-A1-2011/072780
- US-A1- 2002 047 778
- US-A1- 2007 241 874

## Beschreibung

Die Erfindung betrifft ein Verfahren zum Signalisieren eines Bremsvorgangs an einem Anhängefahrzeug gemäß dem Oberbegriff des Anspruchs 1. Die Erfindung betrifft ferner eine Steuereinrichtung gemäß dem Anspruch 4 sowie ein Anhängefahrzeug gemäß dem Anspruch 5.

Die Erfindung betrifft das Gebiet des Signalisierens von Bremsvorgängen eines Fahrzeugs. Es ist bekannt, eine Notbremsung über eine Bremsleuchte anders zu signalisieren als eine sonstige Bremsung, die keine Notbremsung ist (Normalbremsung). Während bei einer Normalbremsung eine Bremsleuchte beispielsweise dauerhaft eingeschaltet wird, erfolgt beim Signalisieren einer Notbremsung beispielsweise eine gepulste Ansteuerung der Bremsleuchte, was zur Folge hat, dass die Bremsleuchte ein Blinksignal abgibt. Wenn das Fahrzeug aus einem Zugfahrzeug und einem daran angekoppelten Anhängefahrzeug besteht, wie es insbesondere im Bereich der Nutzfahrzeuge der Regelfall ist, besteht ein Bedarf daran, die Notbremsung visuell nicht nur am Zugfahrzeug zu signalisieren, sondern auch am Anhängefahrzeug, da dieses die Bremsleuchten des Zugfahrzeuges für nachfolgende Fahrzeuge weitgehend überdeckt. In diesem Fall wäre einerseits denkbar, dass das Bremslichtsignal des Zugfahrzeugs im Fall von Notbremsungen das Notbremssignal beinhaltet, und dass die entsprechende elektrische Betätigung der Bremsleuchten des Zugfahrzeugs elektrisch zum Anhängefahrzeug weitergeleitet wird, so dass das Notbremssignal auch anhand der Bremsleuchten des Anhängefahrzeugs für den nachfolgenden Verkehr erkennbar ist. Eine weitere Möglichkeit wäre, dass das Anhängefahrzeug selbst ein Notbremssignal erzeugt, z. B. wenn ein in dem Anhängefahrzeug verbautes elektronisches Bremssystem eine ungewöhnlich starke Abbremsung anhand von Verzögerungssignalen registriert. In diesem Fall ist eine Signalisierung von Notbremsungen durch Bremsleuchten des Anhängefahrzeugs auch dann möglich, wenn das Anhängefahrzeug an ein Zugfahrzeug gekoppelt ist, das keine Funktion zur Erzeugung eines Notbremssignals aufweist. Dies ist z. B. bei älteren Zugfahrzeugen der Fall. Allerdings wäre ein in dieser Art verbessertes Anhängefahrzeug nicht kompatibel mit einem Zugfahrzeug, das eine eigene Erzeugung eines Notbremssignals aufweist.

WO 2011/072780 A1 offenbart ein gattungsgemäßes Verfahren zum Signalisieren eines Bremsvorgangs an einem Anhängefahrzeug, das an eine Zugfahrzeug angekoppelt ist.

Der Erfindung liegt daher die Aufgabe zugrunde, ein Verfahren zum Signalisieren eines Bremsvorgangs an einem Anhängefahrzeug anzugeben, das mit Zugfahrzeugen beliebiger Bauart, d. h. mit und ohne eigene Notbremssignalerzeugung, betrieben werden kann. Ferner besteht die Aufgabe darin, eine hierfür geeignete Steuereinrichtung für ein solches Anhängefahrzeug sowie ein entsprechendes Anhängefahrzeug anzugeben.
Die Aufgabe wird gemäß Anspruch 1 gelöst durch ein Verfahren zum Signalisieren eines Bremsvorgangs an einem Anhängefahrzeug, das an ein Zugfahrzeug angekoppelt ist, wobei wenigstens eine am Anhängefahrzeug angeordnete Leuchte bei einer Notbremsung mit einem Notbremssignal und bei einen anderen Fahrzustand mit einem Normalsignal betätigt wird, wobei das Notbremssignal zu einer anderen Betätigung der Leuchte führt als das Normalsignal, wobei die am Anhängefahrzeug angeordnete Leuchte sowohl durch ein Ansteuersignal des Zugfahrzeugs betätigbar als auch durch wenigstens eine am Anhängefahrzeug angeordnete Steuereinrichtung in ihrem Betätigungszustand beeinflussbar ist, wobei die Steuereinrichtung ein von dem Zugfahrzeug erzeugtes und dem Anhängefahrzeug zugeführtes Ansteuersignal zur Betätigung der Leuchte erfasst und auswertet und bei Erkennung, dass das Ansteuersignal ein Notbremssignal ist, keine eigene Betätigung oder eine andere Betätigung der Leuchte durchführt als in anderen Fällen, wobei als Notbremssignal ein gepulstes Ansteuersignal vom Zugfahrzeug in der Steuereinrichtung detektiert wird und dass bei Detektion des gepulsten Ansteuersignals die Steuereinrichtung kein gegenphasig gepulstes Ansteuersignal für die Leuchte erzeugt, das das gepulste Ansteuersignal vom Zugfahrzeug auslöscht. Die Erfindung hat den Vorteil, dass mit vergleichsweise geringem technischen Aufwand und damit kostengünstig Bremsvorgänge an einem Anhängefahrzeug signalisiert werden können, bei denen unabhängig von der Ausführung des Zugfahrzeugs, an das das Anhängefahrzeug angekoppelt ist, sowohl eine Notbremsung als auch eine Normalbremsung oder ein anderer Fahrzustand über die am Anhängefahrzeug angeordnete Leuchte dem nachfolgenden Verkehr signalisiert werden kann und die dabei erzeugten Lichtsignale nach wie vor für den nachfolgenden Verkehr eindeutig unterscheidbar bleiben. Der nachfolgende Verkehr kann unabhängig davon, welche Ausführungsform von Zugfahrzeug an dem Anhängefahrzeug angekoppelt ist, klar zwischen einer Notbremsung und einer Normalbremsung bzw. anderen Fahrzuständen anhand des von der Leuchte abgegebenen Lichts unterscheiden. Es werden insbesondere unregelmäßige, intermittierende Leuchtmuster, vollständige Auslöschungen von Lichtansteuerungen oder sonstige nicht eindeutig definierte Lichtsignale vermieden. Die Erfindung trägt daher zur Verbesserung der Verkehrssicherheit bei. Zudem trägt die Erfindung zur Kostenreduzierung im Transportwesen bei, da erfindungsgemäß ausgeführte Anhängefahrzeuge mit beliebigen Zugfahrzeugen gekoppelt werden können.

Ein weiterer Vorteil der Erfindung ist, dass sie sich auch für Fahrzeugzüge mit mehreren Anhängefahrzeugen eignet. In solchen Fällen ist hinter dem direkt mit dem Zugfahrzeug gekoppelten Anhängefahrzeug wenigstens ein weiteres Anhängefahrzeug angekoppelt. Das weitere Anhängefahrzeug kann ebenfalls zur Ausführung des erfindungsgemäßen Verfahrens eingerichtet sein. Die in dem weiteren Anhängefahrzeug vorgesehene Steuereinrichtung empfängt dann entweder indirekt von dem Zugfahrzeug des Fahrzeugzuges das Ansteuersignal oder direkt ein Ansteuersignal des ersten Anhängefahrzeugs, bzw. bei mehr als zwei Anhängefahrzeugen des vorangehenden Anhängefahrzeugs. Insofern ist in solchen Fällen das jeweils vorangehende Anhängefahrzeug sinngemäß das Zugfahrzeug des Anhängefahrzeugs im Sinne des Anspruchs 1.

Die optische Signalisierung einer Notbremsung kann durch die Leuchte z. B. durch eine intermittierende Ansteuerung erfolgen, z. B. durch ein gepulstes Ansteuersignal, das zu einem Blinken der Leuchte führt, während bei einer Normalbremsung eine durchgehende, ununterbrochene Betätigung der Leuchte oder eine intermittierende Betätigung der Leuchte mit anderer Frequenz durchgeführt wird. Die Unterscheidung zwischen einer Notbremsung und einer Normalbremsung kann auch durch unterschiedliche Helligkeitsgrade der Lichtabgabe der Leuchte realisiert sein.

Die zuvor erwähnte, an dem Anhängefahrzeug angeordnete Leuchte kann z. B. eine Bremsleuchte oder eine Blinkleuchte (Fahrtrichtungsanzeiger) sein. Zur Signalisierung einer Notbremsung oder einer Normalbremsung können eine oder mehrere Leuchten des Anhängefahrzeugs betätigt werden, wobei es vorteilhaft ist, hierbei heckseitige Leuchten des Anhängefahrzeuges zu betätigen.

Es kann ebenfalls vorgesehen sein, dass Blinkleuchten des Anhängefahrzeugs zur Signalisierung einer Notbremsung beidseitig eingeschaltet werden bzw. intermittierend eingeschaltet werden.

Sofern es sich bei der am Anhängefahrzeug angeordneten Leuchte um eine Bremsleuchte handelt, ist es vorteilhaft, wenn das Ansteuersignal des Zugfahrzeugs ein Bremslichtsignal ist. Vorgeschlagen wird in diesem Fall ein Verfahren zum Signalisieren eines Bremsvorgangs an einem Anhängefahrzeug, das an ein Zugfahrzeug angekoppelt ist, wobei wenigstens eine am Anhängefahrzeug angeordnete Bremsleuchte bei einer Notbremsung mit einem Notbremssignal und bei einer sonstigen Bremsung, die keine Notbremsung ist, mit einem Normalbremssignal betätigt wird, wobei das Notbremssignal zu einer anderen Betätigung der Bremsleuchte führt als das Normalbremssignal, die am Anhängefahrzeug angeordnete Bremsleuchte sowohl durch ein Bremslichtsignal des Zugfahrzeugs betätigbar als auch durch wenigstens eine am Anhängefahrzeug angeordnete Steuereinrichtung in ihrem Betätigungszustand beeinflussbar ist, wobei die Steuereinrichtung ein von dem Zugfahrzeug erzeugtes und dem Anhängefahrzeug zugeführtes Bremslichtsignal zur Betätigung der Bremsleuchte erfasst und auswertet und bei Erkennung, dass das Bremslichtsignal ein Notbremssignal ist, keine eigene Betätigung oder eine andere Betätigung der Bremsleuchte durchführt als in anderen Fällen.

Gemäß einer vorteilhaften Weiterbildung der Erfindung ermittelt die Steuereinrichtung anhand wenigstens eines der Steuereinrichtung zugeführten Sensorsignals wenigstens eines am Anhängefahrzeug angeordneten Sensors und/oder aufgrund von der Steuereinrichtung von dem Zugfahrzeug zugeführten Abbremsungsdaten, ob ein Bremsvorgang des Anhängefahrzeugs eine Notbremsung ist oder keine Notbremsung ist, und betätigt zumindest in denjenigen Fällen, in denen die Steuereinrichtung nicht erkennt, dass das von dem Zugfahrzeug erzeugte und dem Anhängefahrzeug zugeführte Ansteuersignal ein Notbremssignal ist, die am Anhängefahrzeug angeordnete Leuchte mit einem von der Steuereinrichtung erzeugten Notbremssignal. Dies hat den Vorteil, dass das Anhängefahrzeug autark eine Signalisierung einer Notbremsung für den nachfolgenden Verkehr durchführen kann. Hierdurch kann auch bei Zugfahrzeugen oder vorangehenden Anhängefahrzeugen, die eine entsprechende Signalisierung von Notbremsungen nicht unterstützen, der nachfolgende Verkehr vor einer Notbremsung gewarnt werden.

So kann die Steuereinrichtung z. B. wenigstens einen dem Bremsvorgang zugeordneten Abbremsungswert, wie z. B. eine Ist-Geschwindigkeit, eine Ist-Verzögerung, eine Soll-Verzögerung, ein Bremsanforderungssignal vom Zugfahrzeug oder eine Information über einen automatischen Bremseingriff, ermitteln und mit einem Grenzwert vergleichen. Ist der Grenzwert überschritten, liegt eine Notbremsung vor, und die Steuereinrichtung erzeugt das Notbremssignal. Die Ist-Geschwindigkeit und die Ist-Verzögerung kann die Steuereinrichtung z. B. anhand von Daten, die über Rad-Drehgeschwindigkeitssensoren, wie sie von ABS-Systemen her bekannt sind, selbst ermitteln. Eine Soll-Verzögerung kann z. B. über eine Datenschnittstelle vom Zugfahrzeug der Steuereinrichtung des Anhängefahrzeugs zugeführt werden. Ebenso kann ein Bremsanforderungssignal über diese Datenschnittstelle der Steuereinrichtung vom Zugfahrzeug zugeführt werden.

Die am Anhängefahrzeug angeordnete Steuereinrichtung kann eine separate Steuereinrichtung oder die Steuereinrichtung eines elektronisch gesteuerten Bremssystems sein. Sofern eine separate Steuereinrichtung vorgesehen ist, ist es vorteilhaft, diese über eine Datenkommunikationsverbindung mit einer Steuereinrichtung eines elektronisch gesteuerten Bremssystems des Anhängefahrzeugs zu verbinden, so dass ein Datenaustausch erfolgen kann.
Gemäß einer vorteilhaften Weiterbildung der Erfindung unterdrückt die Steuereinrichtung die Ausgabe des eigenen Notbremssignals an die Leuchte bei Erkennung, dass das von dem Zugfahrzeug erzeugte und dem Anhängefahrzeug zugeführte Ansteuersignal ein Notbremssignal ist. Dies hat den Vorteil, dass ein von dem Zugfahrzeug bereits erzeugtes und dem Anhängefahrzeug zugeführtes Notbremssignal nicht verfälscht wird und sich für den nachfolgenden Verkehr eine eindeutige Signalisierung einer Notbremsung zeigt.

Gemäß der Erfindung wird als Notbremssignal ein gepulstes Ansteuersignal vom Zugfahrzeug in der Steuereinrichtung detektiert, und bei Detektion des gepulsten Ansteuersignals erzeugt die Steuereinrichtung kein gegenphasig gepulstes Ansteuersignal für die Leuchte, das das gepulste Ansteuersignal vom Zugfahrzeug auslöscht. Dies hat den Vorteil, dass es nicht in Folge einer bestimmten Phasenlage zwischen dem gepulsten Ansteuersignal vom Zugfahrzeug und einem ggf. ebenfalls gepulsten Ansteuersignal, das die Steuereinrichtung erzeugt, im Ergebnis zu gegenseitigen Auslöschungen des an die Bremsleuchte abgegebenen Signals kommt. Dies wäre ungünstig, weil dann trotz einer Bremsung dem nachfolgenden Verkehr nicht signalisiert wird, dass überhaupt eine Bremsung stattfindet, zumal es sich sogar um eine Notbremsung handelt. Solche Zustände können durch die Erfindung vermieden werden. Als gepulstes Signal wird dabei ein zeitlich intermittierendes Signal verstanden, z. B. ein Rechtecksignal, das zum gepulsten Einschalten und Ausschalten der Leuchte führt, was z. B. den Effekt hat, dass die Leuchte blinkt. Als von der Steuereinrichtung erzeugtes Ansteuersignal für die Leuchte sei auch ein Abschaltsignal verstanden, das zum zumindest zeitweisen Abschalten einer durch das Zugfahrzeug eingeschalteten Leuchte führt.

Gemäß einer vorteilhaften Weiterbildung der Erfindung verfährt die Steuereinrichtung bei Erkennung, dass das Ansteuersignal ein Notbremssignal ist, nach wenigstens einer der folgenden Verfahrensweisen in Bezug auf die Betätigung der Leuchte:
a) Durchleiten des Ansteuersignals vom Zugfahrzeug zur Leuchte,
b) Unterdrücken des Ansteuersignals vom Zugfahrzeug und Ausgabe eines eigenen gepulsten Ansteuersignals an die Leuchte,
c) Ausgabe eines eigenen Ansteuersignals an die Leuchte, das auf das Ansteuersignal des Zugfahrzeugs synchronisiert ist.

Im Fall a) kann z. B. vorgesehen sein, dass die Steuereinrichtung eingangsseitig das Ansteuersignal empfängt und zumindest bei Notbremsungen als eigenes Ausgangssignal nachbildet und an die am Anhängefahrzeug angeordnete Leuchte abgibt. In diesem Fall erfolgt das Durchleiten des Ansteuersignals in Form des Nachbildens als eigenes Ausgangssignal. Die Steuereinrichtung kann das Durchleiten des Ansteuersignals sowohl bei einer Notbremsung als auch bei einer Normalbremsung oder bei anderen Fahrzuständen durchführen, allerdings dann nicht, wenn die Steuereinrichtung selbst eine Notbremsung signalisieren muss, das Ansteuersignal aber kein Notbremssignal ist. Sofern die Leuchte über eine elektrische Leitung direkt von dem Zugfahrzeug angesteuert werden kann und die Steuereinrichtung nur durch Unterbrechung dieser Leitung, z. B. über ein Relais, die Betätigung der Leuchte beeinflussen kann, so wird zum Durchleiten des Ansteuersignals vom Zugfahrzeug zur Leuchte die Leitung von der Steuereinrichtung nicht unterbrochen. Lediglich wenn die Steuereinrichtung erkennt, dass eine eigene Betätigung der Leuchte zur Signalisierung der Notbremsung erforderlich ist und das Ansteuersignal aber kein Notbremssignal ist, wird ggf. intermittierend die Leitung unterbrochen.

Der Fall b) eignet sich ebenfalls für die beiden zuvor beschriebenen Arten der elektrischen Verkabelung der Leuchte. Im erstgenannten Fall berücksichtigt die Steuereinrichtung das Ansteuersignal des Zugfahrzeugs zur Erzeugung des eigenen gepulsten Ansteuersignals nicht weiter, sondern erzeugt ein eigenes gepulstes Ansteuersignal entsprechend seiner Systemeinstellung, das nicht unbedingt eine Nachbildung des Ansteuersignals des Zugfahrzeugs sein muss. Im zweit genannten Fall kann statt der Unterbrechung der Leitung vom Zugfahrzeug zur Leuchte eine Umschaltung, z. B. über ein Relais, vorgesehen sein, wobei zum Unterdrücken des Ansteuersignals vom Zugfahrzeug die Leuchte elektrisch von der Verbindung zum Zugfahrzeug getrennt wird und mit der Steuereinrichtung des Anhängefahrzeugs verbunden wird. Dieses erzeugt dann ein eigenes gepulstes Ansteuersignal.

Der Fall c) eignet sich ebenfalls für alle zuvor genannten Schaltungsvarianten. Die Steuereinrichtung synchronisiert ihr eigenes Ansteuersignal auf das Ansteuersignal des Zugfahrzeugs, so dass ebenfalls für den nachfolgenden Verkehr eindeutig erkennbare Lichtsignale abgegeben werden und es nicht zu Auslöschungen kommt.

Die Erfindung betrifft ferner eine Steuereinrichtung mit wenigstens einem Lichtsteuersignal-Eingangsanschluss, wenigstens einem Rechner und wenigstens einem Computerprogramm mit Programmcodemitteln, die eingerichtet sind zur Ausführung eines Verfahrens der zuvor beschriebenen Art, wenn das Programm auf dem Rechner ausgeführt wird. Die Steuereinrichtung kann z. B. Teil eines elektronisch gesteuerten Bremssystems sein.

Die Erfindung betrifft ferner ein Anhängefahrzeug mit wenigstens einer Steuereinrichtung der zuvor beschriebenen Art, wenigstens einer Leuchte, wenigstens einem elektrischen Verbinder zur Verbindung einer elektrischen Anlage des Anhängefahrzeugs mit einer elektrischen Anlage des Zugfahrzeugs, wobei die Leuchte über wenigstens eine elektrische Leitung der elektrischen Anlage des Anhängefahrzeugs indirekt mit dem elektrischen Verbinder verbunden ist, derart, dass die Leuchte über die Steuereinrichtung oder über eine Abschalteinrichtung oder Umschalteinrichtung, die von der Steuereinrichtung steuerbar ist, mit dem Verbinder verbunden ist. Der elektrische Verbinder kann z. B. als Steckverbinder ausgebildet sein.

Die Erfindung wird nachfolgend anhand von Ausführungsbeispielen unter Verwendung von Zeichnungen näher erläutert.

Es zeigen:
- Figur 1: ein Zugfahrzeug und ein Anhängefahrzeug in schematischer Darstellung in einer ersten Ausführungsform und
- Figur 2: ein Anhängefahrzeug in schematischer Darstellung in einer zweiten Ausführungsform und
- Figur 3: ein Anhängefahrzeug in schematischer Darstellung in einer dritten Ausführungsform und
- Figur 4: Lichtansteuersignale gemäß dem Stand der Technik und
- Figur 5: eine Ausführungsform erfindungsgemäßer Lichtansteuersignale.

In den Figuren werden gleiche Bezugszeichen für einander entsprechende Elemente verwendet.

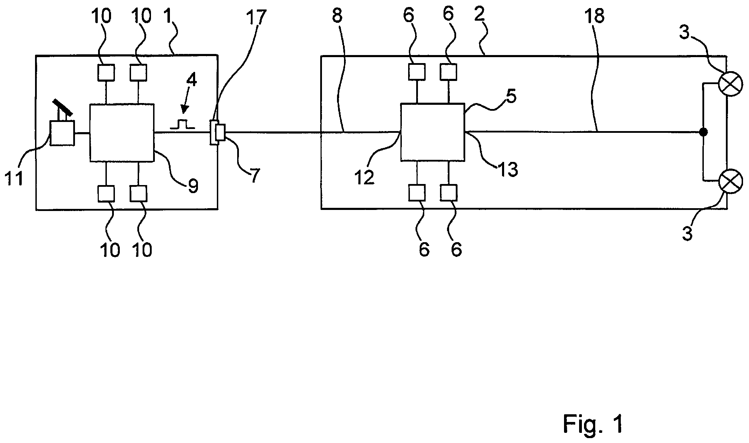

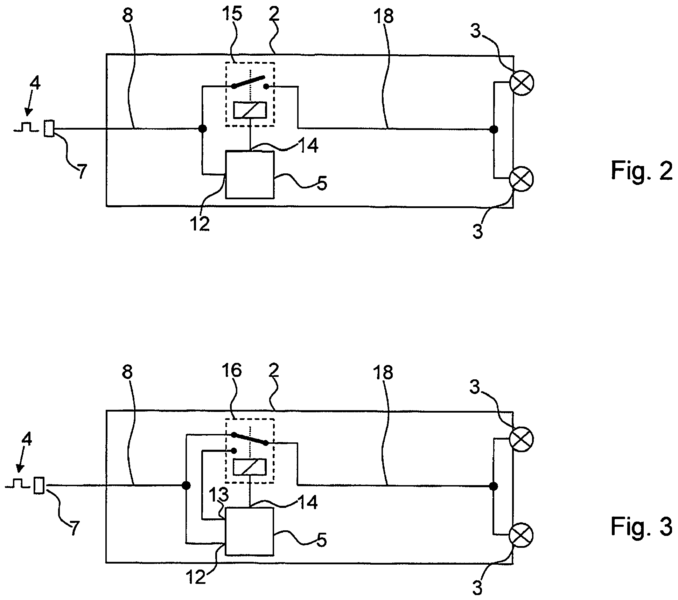

Die Figur 1 zeigt in schematischer Darstellung ein Zugfahrzeug 1 mit einem an das Zugfahrzeug 1 angekoppelten Anhängefahrzeug 2. Dargestellt sind jeweils nur die für die Erfindung relevanten Elemente des Zugfahrzeugs 1 und des Anhängefahrzeugs 2. Das Zugfahrzeug 1 und das Anhängefahrzeug 2 weisen darüber hinaus noch die bei Nutzfahrzeugen, d. h. Lastkraftwagen und deren Anhängern, üblichen Betriebskomponenten auf. Die Figuren 2 und 3 zeigen jeweils in schematischer Darstellung nur das Anhängefahrzeug 2, wobei dieses in der in Figur 1 dargestellten Art an ein Zugfahrzeug 1 angekoppelt werden kann.

Das Zugfahrzeug 1 weist eine Bremsanlage vom elektronisch gesteuerten Typ (EBS-Anlage) oder eine konventionelle pneumatische Bremsanlage auf. Als Teil der Bremsanlage ist ein Bremswertgeber 11 vorgesehen, der mit einem Bremspedal gekoppelt ist. Der Bremswertgeber 11 ist im Falle einer konventionellen pneumatischen Bremsanlage mit einem pneumatischen Motorwagenbremsventil gekoppelt oder weist dieses auf. Im Falle einer EBS-Anlage ist der Bremswertgeber 11 zur Abgabe eines elektrischen Bremswertsignals ausgebildet, über das die Stärke der Abbremsung in Folge einer Bremspedalbetätigung durch den Fahrer festgelegt ist. Der Bremswertgeber 11 ist mit einer Steuerelektronik 9 verbunden. Die Steuerelektronik 9 empfängt das elektrische Bremswertsignal vom Bremswertgeber 11, bzw. im Fall des Motorwagenbremsventils einen Bremsdruck von dem Bremswertgeber 11. Die Steuerelektronik 9 erzeugt aus dem vom Bremswertgeber empfangenen Signal ein Ansteuersignal 4 für eine Leuchte, z. B. ein Bremslichtsignal, das zum Ansteuern der Bremsleuchten des Zugfahrzeugs 1 dient. Die Steuerelektronik 9 steuert dann mittels des Bremslichtsignals die in den Figuren nicht dargestellten Bremsleuchten des Zugfahrzeuges 1 an. Hierdurch wird dem nachfolgenden Verkehr ein Bremsvorgang signalisiert.

Die Steuerelektronik 9 kann zur Ausführung weiterer Funktionen ausgebildet sein und hierfür mit weiteren Sensoren oder Aktoren 10 gekoppelt sein. Beispielsweise kann die Steuerelektronik 9 zugleich auch als zentrale Steuerelektronik einer EBS-Anlage ausgebildet sein.

Die Steuerelektronik 9 gibt das Ansteuersignal 4 über eine elektrische Steckverbindung 7, 17 an eine mit dem Anhängefahrzeug 2 verbundene elektrische Leitung 8 ab. Die elektrische Steckverbindung 7, 17 kann einen Steckverbinder 7, der mit der mit dem Anhängefahrzeug 2 verbundenen elektrischen Leitung 8 verbunden ist, und ein entsprechendes Gegenstück 17 hierfür aufweisen, in das der Steckverbinder 7 einsteckbar ist. Die elektrische Leitung 8 ist in dem Anhängefahrzeug 2 mit einem Lichtsteuersignal-Eingangsanschluss 12 einer elektronischen Steuereinrichtung 5 des Anhängefahrzeugs 2 verbunden. Die elektronische Steuereinrichtung 5 kann z. B. Teil der Bremsanlage des Anhängefahrzeugs 2 sein, z. B. in Form eines Steuergeräts einer elektrisch gesteuerten Bremsanlage des Anhängefahrzeugs. Hierfür kann die elektronische Steuereinrichtung 5 mit weiteren Sensoren oder Aktoren 6 verbunden sein.

Die elektronische Steuereinrichtung 5 erfasst das am Lichtsteuersignal-Eingangsanschluss 12 zugeführte Ansteuersignal 4 und wertet dieses aus. In Abhängigkeit vom Ergebnis der Auswertung erzeugt die elektronische Steuereinrichtung an einem Lichtausgangsanschluss 13 ein elektrisches Lichtsignal, das über eine elektrische Leitung 18 zu wenigstens einer Leuchte 3 des Anhängefahrzeugs geführt wird. Im dargestellten Ausführungsbeispiel weist das Anhängefahrzeug als Leuchte zwei am Heck angeordnete Bremsleuchten 3 auf, die parallel mit der elektrischen Leitung 18 verbunden sind.

Die Figur 1 zeigt damit ein Ausführungsbeispiel, bei dem die Bremsleuchten 3 über die elektrische Leitung 18 indirekt durch die zwischengeschaltete elektronische Steuereinrichtung 5 mit der das Ansteuersignal 4 führenden elektrischen Leitung 8 verbunden sind. Die Betätigung der Bremsleuchten 3 erfolgt damit immer aktiv über die elektronische Steuereinrichtung 5. Sofern die elektronische Steuereinrichtung 5 am Lichtsteuersignal-Eingangsanschluss 12 ein Ansteuersignal 4 detektiert, das einem Normalbremssignal entspricht, so betätigt die elektronische Steuereinrichtung 5 die Bremsleuchten 3 ebenfalls mit einem Normalbremssignal, das dem zugeführten Ansteuersignal 4 entsprechen kann oder davon auch abweichen kann. Sofern die elektronische Steuereinrichtung 5 am Lichtsteuersignal-Eingangsanschluss 12 ein Notbremssignal detektiert, betätigt sie die Bremsleuchten 3 mit einem Notbremssignal, das dem zugeführten Ansteuersignal 4 entsprechen kann oder davon abweichen kann.

Die elektronische Steuereinrichtung 5 kann zudem mit einer Funktion zur Erzeugung eines eigenen Notbremssignals ausgebildet sein. In diesem Fall betätigt die elektronische Steuereinrichtung 5 die Bremsleuchten 3 auch dann mit einem Notbremssignal, wenn das Ansteuersignal 4 kein Notbremssignal ist. Sofern das Ansteuersignal 4 ein Notbremssignal ist und die elektronische Steuereinrichtung 5 zusätzlich selbst ein eigenes Notbremssignal erzeugt, so betätigt die elektronische Steuereinrichtung 5 die Bremsleuchten 3 mit einem Notbremssignal, das dem eigenen Notbremssignal der elektronischen Steuereinrichtung 5 entsprechen kann, oder dem Ansteuersignal 4, oder ein gegenüber diesen Signalen abgewandeltes Notbremssignal sein kann.

Die Figur 2 zeigt eine zweite Ausführungsform eines Anhängefahrzeugs, das bis auf die nachfolgend erläuterten Unterschiede der Ausführungsform gemäß Figur 1 entspricht. Gemäß Figur 2 ist die elektrische Leitung 8 über eine Abschalteinrichtung 15 mit der elektrischen Leitung 18, an die die Bremsleuchten 3 angeschlossen sind, verbunden. Die Abschalteinrichtung 15 ist dazu eingerichtet, die Verbindung zwischen den Leitungen 8, 18 herzustellen oder aufzutrennen. Hierzu ist die Abschalteinrichtung 15 mit einem Steueranschluss 14 der elektronischen Steuereinrichtung 5 verbunden. Die Abschalteinrichtung 15 kann z. B. als Relais oder elektronischer Halbleiterschalter ausgebildet sein. Die elektronische Steuereinrichtung 15 ist über ihren Lichtsteuersignal-Eingangsanschluss 12, wie bei der Ausführungsform gemäß Figur 1, mit der elektrischen Leitung 8 verbunden und empfängt hierüber das Ansteuersignal 4. Die elektronische Steuereinrichtung 5 steuert die Abschalteinrichtung 15 über den Steueranschluss 14 derart, dass die Leitung 18 außer in dem nachfolgend erläuterten Fall immer mit der Leitung 8 verbunden ist. Hierdurch wird das Ansteuersignal 4 von dem Zugfahrzeug 1 immer zu den Bremsleuchten 3 durchgeleitet.

Sofern die elektronische Steuereinrichtung 5 einen Bedarf erkennt, ein eigenes Notbremssignal zu erzeugen, so prüft sie zunächst, ob das Ansteuersignal 4 ein Notbremssignal ist. Sofern dies der Fall ist, führt die elektronische Steuereinrichtung 5 keine eigene Betätigung der Bremsleuchten 3 durch, sondern behält den Zustand der Abschalteinrichtung 15 bei, in dem die Leitung 18 mit der Leitung 8 verbunden ist. Sofern das Ansteuersignal 4 kein Notbremssignal ist, gibt die elektronische Steuereinrichtung 5 ein eigenes Notbremssignal an die Bremsleuchten 3 ab, indem sie über den Steuerausgang 14 die Abschalteinrichtung intermittierend schaltet, so dass die Verbindung zwischen der Leitung 18 und der Leitung 8 intermittierend unterbrochen wird. Hierdurch wird ein Ansteuersignal 4, das sonst eine permanente Einschaltung der Bremsleuchten 3 bewirkt, intermittierend unterbrochen, so dass dem nachfolgenden Verkehr durch ein Blinken der Bremsleuchten 3 eine Notbremsung signalisiert wird.

Die Figur 3 zeigt eine dritte Ausführungsform des Anhängefahrzeugs 2, das bis auf die nachfolgenden Unterschiede den Ausführungsformen gemäß den Figuren 1 und 2 entspricht. Im Unterschied zur Figur 2 ist bei der Figur 3 statt einer Abschalteinrichtung 15 eine Umschalteinrichtung 16 vorgesehen, die dazu eingerichtet ist, die elektrische Verbindung zwischen der Leitung 18 und der Leitung 8 nicht nur zu öffnen und zu schließen, sondern die Leitung 18 bei Auftrennung der Verbindung zur Leitung 8 mit einem Lichtausgangsanschluss 13 der elektronischen Steuereinrichtung 5 zu verbinden. Diese Art der Verkabelung hat den Vorteil, dass anders als bei der Ausführungsform gemäß Figur 2 die Bremsleuchten 3 auch aktiv durch die elektronische Steuereinrichtung 5 betätigt werden können, selbst wenn das Ansteuersignal 4 keine oder keine durchgehende Betätigung der Bremsleuchten 3 beinhaltet. Die elektronische Steuereinrichtung 5 schaltet bei der Ausführungsform gemäß Figur 3 die Umschalteinrichtung 16 in den Fällen, in denen sie kein eigenes Notbremssignal ausgeben muss, immer derart, dass die Leitung 18 mit der Leitung 8 verbunden ist. Sofern die elektronische Steuereinrichtung 5 ein eigenes Notbremssignal ausgeben muss, schaltet sie die Umschalteinrichtung 16 um, so dass die Leitung 18 mit dem Lichtausgangsanschluss 13 verbunden ist.

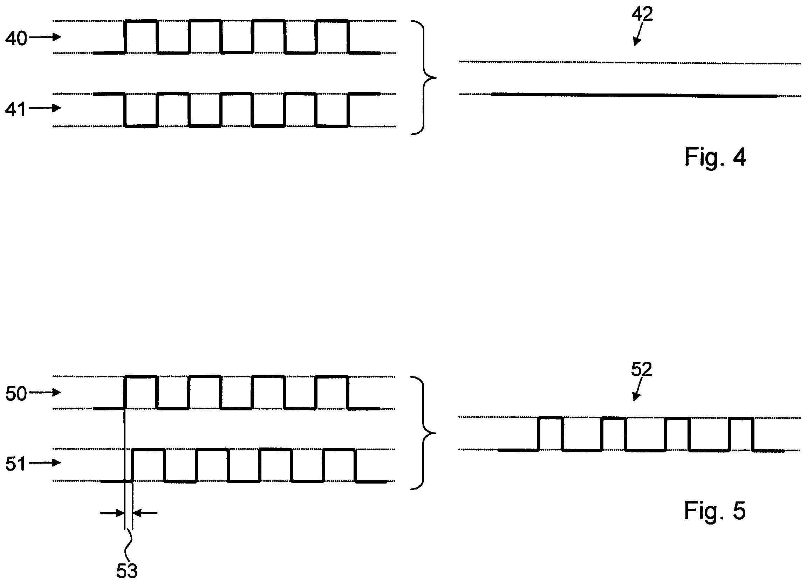

Die Figur 4 zeigt eine Abfolge von Lichtansteuersignalen gemäß dem Stand der Technik. Dargestellt ist eine Signalfolge 40 nach Art eines gepulsten Lichtansteuersignals, wobei ein gleichmäßiges Rechtecksignal unterstellt sei. Die Signalfolge 40 sei das vom Zugfahrzeug 1 erzeugte Ansteuersignal in Form eines Notbremssignals. Die darunter dargestellte Signalfolge 41 sei ein von der elektronischen Steuereinrichtung 5 des Anhängefahrzeugs 2 erzeugtes eigenes Notbremssignal. Die Signalfolge 41 ist hinsichtlich der Frequenz und der übrigen Signalform gleich der Signalfolge 40, wobei aber die Signalfolge 41 genau gegenphasig zu der Signalfolge 40 sei.

Ein niedriger Signalpegel der in den Figuren 4 und 5 dargestellten Signale soll ein Ausschalten einer Bremsleuchte 3 darstellen, ein hoher Signalpegel ein Einschalten.

Werden die Signalfolgen 40, 41 beispielsweise bei der Ausführungsform des Anhängefahrzeugs gemäß Figur 2 erzeugt, würde sich die rechts daneben dargestellte Signalfolge 42 ergeben, die dazu führen würden, dass die Bremsleuchten 3 permanent ausgeschaltet sind, weil sich die Einschaltphasen der einen Signalfolge 40 genau mit den Ausschaltphasen der anderen Signalfolge 41 überdecken und umgekehrt.

Die Figur 5 zeigt eine Ausführungsform einer erfindungsgemäßen Lichtsignalerzeugung. Dargestellt ist als Signalfolge 50 wiederum ein Ansteuersignal des Zugfahrzeugs 1, wobei angenommen sei, die Signalfolge 50 entspricht der Signalfolge 40. Die elektronische Steuereinrichtung 5 des Anhängefahrzeugs 2 erfasst das Ansteuersignal 4 des Zugfahrzeugs 1 und damit die Signalfolge 50 und wertet diese aus. Erkennt die elektronische Steuereinrichtung 5, dass die Signalfolge 50 ein Notbremssignal ist, erzeugt die elektronische Steuereinrichtung 5 als eigenes Ansteuersignal für die Bremsleuchten 3 die Signalfolge 51, die auf die Signalfolge 50 synchronisiert ist, wobei eine gewisse Phasenverschiebung 53 zulässig ist. Hierdurch werden die Bremsleuchten 3 mit einer Signalfolge 52 beaufschlagt, die, wie in der Figur 5 rechts erkennbar ist, noch zu einem erkennbaren Signalisieren einer Notbremsung führt, selbst wenn sie nicht mehr exakt dem Ansteuersignal 4 entspricht.

## Patentansprüche

1. Verfahren zum Signalisieren eines Bremsvorgangs an einem Anhängefahrzeug, das an ein Zugfahrzeug (1) angekoppelt ist, wobei wenigstens eine am Anhängefahrzeug (2) angeordnete Leuchte (3) bei einer Notbremsung mit einem Notbremssignal und bei einen anderen Fahrzustand mit einem Normalsignal betätigt wird, wobei das Notbremssignal zu einer anderen Betätigung der Leuchte (3) führt als das Normalsignal, wobei die am Anhängefahrzeug (2) angeordnete Leuchte (3) sowohl durch ein Ansteuersignal (4) des Zugfahrzeugs (1) betätigbar als auch durch wenigstens eine am Anhängefahrzeug (2) angeordnete Steuereinrichtung (5) in ihrem Betätigungszustand beeinflussbar ist, wobei die Steuereinrichtung (5) ein von dem Zugfahrzeug (1) erzeugtes und dem Anhängefahrzeug (2) zugeführtes Ansteuersignal (4) zur Betätigung der Leuchte (3) erfasst und auswertet und bei Erkennung, dass das Ansteuersignal (4) ein Notbremssignal ist, keine eigene Betätigung oder eine andere Betätigung der Leuchte (3) durchführt als in anderen Fällen, **dadurch gekennzeichnet, dass** als Notbremssignal ein gepulstes Ansteuersignal (4) vom Zugfahrzeug (1) in der Steuereinrichtung (5) detektiert wird und dass bei Detektion des gepulsten Ansteuersignals (4) die Steuereinrichtung (5) kein gegenphasig gepulstes Ansteuersignal für die Leuchte (3) erzeugt, das das gepulste Ansteuersignal (4) vom Zugfahrzeug (1) auslöscht.

2. Verfahren nach Anspruch 1, **dadurch gekennzeichnet, dass** die Steuereinrichtung (5) bei Erkennung, dass das Ansteuersignal (4) ein Notbremssignal ist, nach wenigstens einer der folgenden Verfahrensweisen in Bezug auf die Betätigung der Leuchte (3) verfährt:
a) Durchleiten des Ansteuersignals (4) vom Zugfahrzeug (1) zur Leuchte (3),
b) Unterdrücken des Ansteuersignals (4) vom Zugfahrzeug (1) und Ausgabe eines eigenen gepulsten Ansteuersignals an die Leuchte (3),
c) Ausgabe eines eigenen Ansteuersignals an die Leuchte (3), das auf das Bremslichtsignal (4) des Zugfahrzeugs (1) synchronisiert ist.

3. Verfahren nach einem der vorhergehenden Ansprüche, **dadurch gekennzeichnet, dass** die Steuereinrichtung anhand wenigstens eines der Steuereinrichtung zugeführten Sensorsignals wenigstens eines am Anhängefahrzeug (2) angeordneten Sensors (6) und/oder aufgrund von der Steuereinrichtung (5) von dem Zugfahrzeug zugeführten Abbremsungsdaten ermittelt, ob ein Bremsvorgang des Anhängefahrzeugs (2) eine Notbremsung ist oder keine Notbremsung ist, und betätigt zumindest in denjenigen Fällen, in denen die Steuereinrichtung (5) nicht erkennt, dass das von dem Zugfahrzeug (1) erzeugte und dem Anhängefahrzeug (2) zugeführte Ansteuersignal (4) ein Notbremssignal ist, die am Anhängefahrzeug (2) angeordnete Leuchte (3) mit einem von der Steuereinrichtung (5) erzeugten Notbremssignal.

4. Verfahren nach einem der vorhergehenden Ansprüche, **dadurch gekennzeichnet, dass** wenigstens eine am Anhängefahrzeug (2) angeordnete Bremsleuchte (3) bei einer Notbremsung mit einem Notbremssignal und bei einer sonstigen Bremsung, die keine Notbremsung ist, mit einem Normalbremssignal betätigt wird, wobei das Notbremssignal zu einer anderen Betätigung der Bremsleuchte (3) führt als das Normalbremssignal, die am Anhängefahrzeug (3) angeordnete Bremsleuchte (2) sowohl durch ein Bremslichtsignal (4) des Zugfahrzeugs (1) betätigbar als auch durch wenigstens eine am Anhängefahrzeug (2) angeordnete Steuereinrichtung (5) in ihrem Betätigungszustand beeinflussbar ist, wobei die Steuereinrichtung (5) ein von dem Zugfahrzeug (1) erzeugtes und dem Anhängefahrzeug zugeführtes Bremslichtsignal (4) zur Betätigung der Bremsleuchte (3) erfasst und auswertet und bei Erkennung, dass das Bremslichtsignal (4) ein Notbremssignal ist, keine eigene Betätigung oder eine andere Betätigung der Bremsleuchte (3) durchführt als in anderen Fällen.

5. Steuereinrichtung (5) mit wenigstens einem Lichtsteuersignal-Eingangsanschluss (12), wenigstens einem Rechner und wenigstens einem Computerprogramm mit Programmcodemitteln, die eingerichtet sind zur Ausführung eines Verfahrens nach einem der vorhergehenden Ansprüche, wenn das Programm auf dem Rechner ausgeführt wird.

6. Anhängefahrzeug (2) mit einer wenigstens Steuereinrichtung (5) nach Anspruch 5, wenigstens einer Leuchte (3), einem elektrischen Verbinder (7) zur Verbindung einer elektrischen Anlage des Anhängefahrzeugs (2) mit einer elektrischen Anlage des Zugfahrzeugs (1), wobei die Leuchte (3) über wenigstens eine elektrische Leitung (8, 18) der elektrischen Anlage des Anhängefahrzeugs (2) indirekt mit dem elektrischen Verbinder (7) verbunden ist, derart dass die Leuchte (3) über die Steuereinrichtung (5) oder über eine Abschalteinrichtung (15) oder Umschalteinrichtung (16), die von der Steuereinrichtung (5) steuerbar ist, mit dem Verbinder (7) verbunden ist.

## Claims

1. Method for signaling a braking process on a trailer vehicle that is coupled to a towing vehicle (1), wherein at least one light (3) disposed on the trailer vehicle (2) is operated for emergency braking with an emergency braking signal and is operated for a different driving state with a normal signal, wherein the emergency braking signal causes different operation of the light (3) than the normal signal, wherein the light (3) disposed on the trailer vehicle (2) can both be operated by a control signal (4) of the towing vehicle (1) and also influenced in its operating state by at least one control device (5) disposed on the trailer vehicle (2), wherein the control device (5) detects and analyzes a control signal (4) for operating the light (3) that is generated by the towing vehicle (1) and supplied to the trailer vehicle (2) and on detecting that the control signal (4) is an emergency braking signal, does not perform a separate operation of the light (3) or a different operation than in other cases, **characterized in that** a pulsed control signal (4) from the towing vehicle (1) is detected in the control device (5) as an emergency braking signal and that on detection of the pulsed control signal (4) the control device (5) does not generate an anti-phase pulsed control signal for the light (3) that cancels the pulsed control signal (4) from the towing vehicle (1).

2. Method according to Claim 1, **characterized in that** the control device (5), on detecting that the control signal (4) is an emergency braking signal, proceeds according to at least one of the following procedures in relation to the operation of the light (3):
a) passing the control signal (4) from the towing vehicle (1) through to the light (3),
b) inhibiting the control signal (4) from the towing vehicle (1) and outputting a separate pulsed control signal to the light (3),
c) outputting a separate control signal to the light (3) that is synchronized with the brake light signal (4) of the towing vehicle (1).

3. Method according to either of the preceding claims, **characterized in that** the control device, using at least one sensor signal of at least one sensor (6) disposed on the trailer vehicle (2) and delivered to the control device and/or on the basis of braking data supplied to the control device (5) from the towing vehicle, determines whether a braking process of the trailer vehicle (2) is emergency braking or is not emergency braking, and operates the light (3) disposed on the trailer vehicle (2) with an emergency braking signal generated by the control device (5), at least in those cases in which the control device (5) does not detect that the control signal (4) generated by the towing vehicle (1) and supplied to the trailer vehicle (2) is an emergency braking signal.

4. Method according to any one of the preceding claims, **characterized in that** at least one brake light (3) disposed on the trailer vehicle (2) is operated with an emergency braking signal for emergency braking and is operated with a normal braking signal for other braking that is not emergency braking, wherein the emergency braking signal causes different operation of the brake light (3) than the normal braking signal, the brake light (2) disposed on the trailer vehicle (3) can both be operated by a brake light signal (4) of the towing vehicle (1) and can also be influenced in its operating state by at least one control device (5) disposed on the trailer vehicle (2), wherein the control device (5) detects and analyzes a brake light signal (4) for operating the brake light (3) generated by the towing vehicle (1) and supplied to the trailer vehicle and, on detecting that the brake light signal (4) is an emergency braking signal, does not perform a separate operation of the brake light (3) or a different operation than in other cases.

5. Control device (5) with at least one light control signal input terminal (12), at least one computer and at least one computer program with program code means, which are arranged to carry out a process according to any one of the preceding claims if the program is executed on the computer.

6. Trailer vehicle (2) with at least one control device (5) according to Claim 5, at least one light (3), an electrical connector (7) for connecting an electrical system of the trailer vehicle (2) to an electrical system of the towing vehicle (1), wherein the light (3) is indirectly connected to the electrical connector (7) via at least one electrical line (8, 18) of the electrical system of the trailer vehicle (2) such that the light (3) is connected to the connector (7) via the control device (5) or via a shut-off device (15) or changeover device (16), which can be controlled by the control device (5).

## Revendications

1. Procédé de signalisation d'une opération de freinage au niveau d'un véhicule remorqué qui est attelé à un véhicule tracteur (1), au moins une lampe (3) disposée au niveau du véhicule remorqué (2) étant actionnée avec un signal de freinage d'urgence dans le cas d'un freinage d'urgence et avec un signal normal lors d'un autre état de conduite, le signal de freinage d'urgence donnant lieu à un actionnement différent de la lampe (3) que le signal normal, la lampe (3) disposée au niveau du véhicule remorqué (2) pouvant aussi bien être actionné par un signal d'excitation (4) du véhicule tracteur (1) que pouvant être influencée dans son état d'actionnement par au moins un dispositif de commande (5) disposé au niveau du véhicule remorqué (2), le dispositif de commande (5) détectant et interprétant un signal d'excitation (4) destiné à actionner la lampe (3), généré par le véhicule tracteur (1) et acheminé au véhicule remorqué (2), et en cas de reconnaissance du fait que le signal d'excitation (4) est un signal de freinage d'urgence, n'effectue aucun actionnement propre ou un actionnement différent de la lampe (3) que dans les autres cas, **caractérisé en ce que** le signal de freinage d'urgence détecté dans le dispositif de commande (5) est un signal d'excitation (4) impulsionnel du véhicule tracteur (1) et qu'en cas de détection du signal d'excitation (4) impulsionnel, le dispositif de commande (5) ne génère pas de signal d'excitation impulsionnel en opposition de phase pour la lampe (3), lequel annule le signal d'excitation (4) impulsionnel du véhicule tracteur (1).

2. Procédé selon la revendication 1, **caractérisé en ce que** le dispositif de commande (5), en cas de reconnaissance que le signal d'excitation (4) est un signal de freinage d'urgence, procède d'au moins l'une des manières suivantes pour ce qui concerne l'actionnement de la lampe (3) :
a) transmission du signal d'excitation (4) du véhicule tracteur (1) à la lampe (3),
b) inhibition du signal d'excitation (4) du véhicule tracteur (1) et délivrance d'un signal d'excitation impulsionnel propre à la lampe (3),
c) délivrance à la lampe (3) d'un signal d'excitation impulsionnel propre qui est synchronisé sur le signal de feu stop (4) du véhicule tracteur (1).

3. Procédé selon l'une des revendications précédentes, **caractérisé en ce que** le dispositif de commande détermine, à l'aide d'au moins un signal de capteur acheminé au dispositif de commande d'au moins un capteur (6) disposé au niveau du véhicule remorqué (2) et/ou sur la base de données de freinage acheminées au dispositif de commande (5) depuis le véhicule tracteur, si une opération de freinage du véhicule remorqué (2) est un freinage d'urgence ou n'est pas un freinage d'urgence et, au moins dans les cas dans lesquels le dispositif de commande (5) ne reconnaît pas que le signal d'excitation (4) généré par le véhicule tracteur (1) et acheminé au véhicule remorqué (2) est un signal de freinage d'urgence, actionne la lampe (3) disposée au niveau du véhicule remorqué (2) avec un signal de freinage d'urgence généré par le dispositif de commande (5).

4. Procédé selon l'une des revendications précédentes, **caractérisé en ce qu'**au moins un feu stop (3) disposé au niveau du véhicule remorqué (2) est actionné avec un signal de freinage d'urgence dans le cas d'un freinage d'urgence et, lors d'un autre freinage qui n'est pas un freinage d'urgence, avec un signal de freinage normal, le signal de freinage d'urgence donnant lieu à un autre actionnement du feu stop (2) que le signal de freinage normal, le feu stop (3) disposé au niveau du véhicule remorqué (2) pouvant aussi bien être actionné par un signal de feu stop (4) du véhicule tracteur (1) et influencé dans son état d'actionnement par au moins un dispositif de commande (5) disposé au niveau du véhicule remorqué (2), le dispositif de commande (5) détectant et interprétant un signal de feu stop (4) destiné à actionner le feu stop (3) généré par le véhicule tracteur (1) et acheminé au véhicule remorqué et, en cas de reconnaissance du fait que le signal de feu stop (4) est un signal de freinage d'urgence, n'effectue pas d'actionnement propre ou un actionnement différent du feu stop (3) que dans les autres cas.

5. Dispositif de commande (5) comprenant au moins une borne d'entrée de signal de commande de feu (12), au moins un ordinateur et au moins un programme informatique comprenant des moyens de code de programme qui sont conçus pour mettre en oeuvre un procédé selon l'une des revendications précédentes lorsque le programme est exécuté sur l'ordinateur.

6. Véhicule remorqué (2) comprenant au moins un dispositif de commande (5) selon la revendication 5, au moins une lampe (3), un connecteur électrique (7) destiné à connecter une installation électrique du véhicule remorqué (2) avec une installation électrique du véhicule tracteur (1), la lampe (3) étant reliée indirectement au connecteur électrique (7) par le biais d'au moins une ligne électrique (8, 18) de l'installation électrique du véhicule remorqué (2) de telle sorte que la lampe (3) est reliée au connecteur (7) par le biais du dispositif de commande (5) ou par le biais d'un dispositif de mise hors circuit (15) ou d'un dispositif d'inversion (16) qui peut être commandé par le dispositif de commande (5).
